(19) Europäisches Patentamt
European Patent Office
Office européen des brevets

(11) **EP 3 392 800 B1**

(12) **EUROPEAN PATENT SPECIFICATION**

(45) Date of publication and mention
of the grant of the patent:
**13.08.2025  Bulletin 2025/33**

(21) Application number: **17465515.9**

(22) Date of filing: **21.04.2017**

(51) International Patent Classification (IPC):
**G06V 10/44** (2022.01)     **G06V 20/56** (2022.01)

(52) Cooperative Patent Classification (CPC):
**G06V 20/56; G06V 10/443**

(54) **DEVICE FOR DETERMINING A WEATHER STATE**

VORRICHTUNG ZUR BESTIMMUNG VON WITTERUNGSVERHÄLTNISSEN

DISPOSITIF DE DÉTERMINATION D'UN ÉTAT MÉTÉOROLOGIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.10.2018  Bulletin 2018/43**

(73) Proprietor: **AUMOVIO Autonomous Mobility
Germany GmbH
85057 Ingolstadt (DE)**

(72) Inventor: **Maria, Robert
300719 Timisoara (RO)**

(74) Representative: **Aumovio Corporation
Continental Automotive
Technologies GbH
Putzbrunner Straße 69
81739 München (DE)**

(56) References cited:
US-A1- 2005 098 712     US-A1- 2016 232 423
US-A1- 2017 109 612

• "Detection of Unfocused Raindrops on a
Windscreen using Low Level Image Processing",
INTERNATIONAL CONFERENCE ON CONTROL,
AUTOMATION, ROBOTICS AND VISION:
ICARV'2010,, 1 December 2010 (2010-12-01),
pages 1410 - 1415, XP002770290
• CORD AURELIEN ET AL: "Detecting Unfocused
Raindrops: In-Vehicle Multipurpose Cameras",
IEEE ROBOTICS & AUTOMATION MAGAZINE,
IEEE SERVICE CENTER, PISCATAWAY, NJ, US,
vol. 21, no. 1, 1 March 2014 (2014-03-01), pages
49 - 56, XP011542521, ISSN: 1070-9932, [retrieved
on 20140311], DOI: 10.1109/MRA.2013.2287451

## Description

FIELD OF THE INVENTION

The present invention relates to a device for determining a weather state, to a system for determining a weather state, to a method for determining a weather state, as well as to a computer program element.

BACKGROUND OF THE INVENTION

The general background of this invention is the field of driving information provision systems, and specifically to the determination of a weather state, such as is it raining or foggy.

Existing solutions for rain detection make use of the photometric properties of rain drops or rain streaks on windscreens. However, variations in raindrops or streaks can cause problems, and such systems interrogating raindrops on windscreens cannot determine the presence of other weather states such as the presence of fog. The following prior art is acknowledged:

D1 US 2005/098712 A1 (STAM JOSEPH S [US] ET AL) 12 May 2005 (2005-05-12)
D2 US 2017/109612 A1 (MITTAL ANISH [US] ET AL) 20 April 2017 (2017-04-20)
D3 US 2016/232423 A1 (ZHONG XIN [US] ET AL) 11 August 2016 (2016-08-11)
D4 "Detection of Unfocused Raindrops on a Windscreen using Low Level Image Processing", INTERNATIONAL CONFERENCE ON CONTROL, AUTOMATION, ROBOTICS AND VISION: ICARV'2010,, 1 December 2010 (2010-12-01), pages 1410-1415, XP002770290,
D5 CORD AURELIEN ET AL: "Detecting Unfocused Raindrops: In-Vehicle Multipurpose Cameras", IEEE ROBOTICS & AUTOMATION MAGAZINE, IEEE SERVICE CENTER, PISCATAWAY, NJ, US, vol. 21, no. 1, 1 March 2014 (2014-03-01), pages 49-56, XP011542521, ISSN: 1070-9932, DOI: 10.1109/MRA.2013.2287451 [retrieved on 2014-03-11]

There is a need to be able to address these issues.

SUMMARY OF THE INVENTION

It would be advantageous to have an improved device for determining a weather state.

The object of the present invention is solved with the subject matter of the independent claims, wherein further embodiments are incorporated in the dependent claims. It should be noted that the following described aspects and examples of the invention apply also for determining a weather state, the system for determining a weather state, the method for determining a weather state, and for the computer program element.

In a first aspect, there is provided a device for determining a weather state, comprising:

- an input unit;
- a processing unit; and
- an output unit.

The input unit is configured to provide the processing unit with at least one image, the at least one image relating to a scene external to a vehicle viewed through a windscreen of the vehicle. The processing unit is configured to process the at least one image to determine a plurality of measurements of features that are correlated with blur. The processing unit is configured to determine information relating to a weather state outside the vehicle, the determination comprising a calculation of at least one measure of a spread in the plurality of measurements. The output unit is configured to output information representative of the weather state outside the vehicle.

In this way, a weather state such as it is raining, snowing, sleeting, there is a hail storm, it is foggy or misty or indeed the weather is fair, can be determined on the basis of a measure of spread in measurements of features that are correlated with blur. Here a measurement of a feature correlated with blur can mean a measure of sharpness, and/or a degree of focus, and/or a measure of edges in an image. Thus, in other words an imaged scene will tend to have features that become "washed out" due to for example that it is raining. This means that when it is not raining an imaged scene will have features that are sharply defined, with little blur and also have features where there is less feature definition and therefore we are less sensitive to a measurement of blur. There is then a spread in the measurements of features correlated with blur between these levels. However, in inclement weather, for example when it is raining, the rain drops disrupt the imaged scene such that features that would have been sharp and thus would have had a correspondingly low level of blur are now not so clearly defined and have become blurred to a certain degree. Then, there is a change in the spread of the measurements correlated with blur in the image with respect to the scene with no rain, and this can be used to determine that it is raining. Similarly, it can be determined if it is foggy, hailing etc. Taking the example of rain, the change in blur occurs due to the rain drops in the imaged scene volume and also due to the raindrops that are on the windscreen. Thus, if it is raining ahead but the raindrops have not at that moment in time struck the windscreen it can still be determined that it is raining, which also enables it to be determined that it is foggy or misty etc.

Thus blur, which can be considered to relate to features being "washed out" out in an image due to the weather or can be considered to relate to features that become less clear because of reduced edge content in an image can be calculated, and the spread in that blur (for example calculated by a variance in Laplacian) calculated, such that a threshold can be determined between blur due to rain and no-blur in no-rain images etc, with such a threshold being determinable by for example a Support Vector Machine (SVM).

A notification can then be given to in car systems to initiate the windscreen wipers and/or headlamps and/or inform other driving systems that the vehicle is approaching or within a region that has a certain weather state, for example adjust traction control systems appropriately.

In an example, the processing unit is configured to utilise a Laplacian operator to determine the plurality of measurements of features that are correlated with blur.

Thus, an efficient operator can be used to determine edges in an imaged scene, and this can be used to determine the measure of blur within regions of the imaged scene. Computational efficiency is therefore provided.

According to the invention, the calculation of the measure of the spread in the plurality of measurements of features that are correlated with blur comprises a determination of a variance in the plurality of measurements.

Thus, the variance of the Laplacian is related to edge detection, which is impacted by the amount of blur in an image that is dependent upon the weather state.

According to the invention, the processing unit is configured to process the at least one image to determine one or more of: at least one mean hue value; at least one mean saturation value; at least one contrast value; and at least one minimum brightness value; and wherein the determination of the information relating to the weather state outside the vehicle comprises one or more of: the at least one mean hue value; the at least one mean saturation value; the at least one contrast value; and the at least one minimum brightness value.

Thus, the spread in the measure of measurements, such as the variance in the Laplacian across an image, can be augmented by information such as the mean hue level, mean saturation value, contrast, minimum brightness in the image. Thus, colour information as provided within the hue and saturation values can be used to provide further information on what the weather state is, because for example whether it is raining or not leads to changes in these parameters. Also, the contrast and minimum brightness values, which need not have colour information and can relate to greyscale data also correlate with different weather states, and this information can be used to aid in the determination of the weather state.

In an example, the processing unit is configured to subdivide the at least one image into a plurality of local regions of interest; wherein the processing unit is configured to determine a plurality of measurements of features that are correlated with blur for each of the plurality of the local regions of interest; and wherein the processing unit is configured to determine a plurality of measures of spread in the plurality of measurements of features that are correlated with blur in the plurality of local regions, wherein a measure of spread is calculated for each local region.

In other words, a measure of spread in the measurements of features that are correlated with blur, such as a variance in Laplacian, is calculated for each of a number of local regions of an image. This enables, the change in blur and the change in the spread of blur to be determined in different parts of an image that could have different baseline feature imagery, such as some parts of the image could have a lot of features and some parts of the image have fewer features, and by doing so the algorithm is able better to determine the weather state.

In an example, the processing unit is configured to calculate for each of the plurality of local regions one or more of: one mean hue value; one mean saturation value; one contrast value; and one minimum brightness value.

In other words, a hue value, saturation value, contrast value, and minimum brightness value can be calculated for each of the number of local regions of the image.

In an example, the processing unit is configured to determine a plurality of measurements of features that are correlated with blur for a global region that is larger than any of the local regions; and wherein the processing unit is configured to determine a plurality of measures of spread in the plurality of measurements of features that are correlated with blur in the global region.

In other words, to complement the local calculations of the spread in the measure of blur, a global determination of a measure of the spread of blur is also determined to ensure that small scale features do not lead to inaccurate calculations.

In an example, for the global region, the processing unit is configured to calculate one or more of: one mean hue value; one mean saturation value; one contrast value; and one minimum brightness value.

In an example, each measurement of features that are correlated with blur is centred at a position that is not at the lateral sides of the at least one image; and/or each measurement of features that are correlated with blur is centred at a position that is not at the top and/or bottom of the at least one image.

In this way, by not interrogating the bottom part of images the bonnet of a vehicle is omitted from analysis, where there would be few features (such as edges in the imagery) that could have a change in blur (change in focus) with a change in weather conditions, such as when it is raining or foggy. Furthermore, by omitting the bonnet of the car from analysis an area of the image that is just too close to the camera is not analysed. Similarly, by not interrogating the top part of images the sky is omitted from analysis, where there would be few features (such as edges in the imagery) that could have a change in blur (change in focus) with a change in weather conditions, such as when it is raining or foggy.

In this manner, by not interrogating the left and right far edges of the imagery, the determination of the weather can perform in any environment such as urban, rural or highway scenarios. This is because the number of features (such as edges) at the edges of imagery can change widely between such environments, where for example a rural environment could be wooded and have lots of edges at the edges of the imagery or be meadows with few edges, or an urban scene could be a sidewalk or pavement or the side of a building with few edges (or features) that could lead to a change in blur with weather or an urban scene could be in a busy commuter area with many objects at the sides of the imagery, such as pedestrians, producing many edges, whereas a wall will not. By omitting the edges of the imagery the algorithm produces more similar results in such different environments.

In an example, the at least one image comprises a first image and a second image, and wherein the determination of information relating to a weather state outside of the vehicle comprises a calculation of at least one measure of a spread in the plurality of measurements of features that are correlated with blur in the first image and a calculation of at least one measure of a spread in the plurality of measurements of features that are correlated with blur in the second image.

In a second aspect, there is provided a system for determining a weather state, comprising:

- at least one camera;
- a device for determining a weather state according to the first aspect.

The at least one camera is configured to be located within a vehicle and the at least one camera is configured to acquire the at least one image relating to a scene external to the vehicle viewed through the windscreen of the vehicle.

In this manner, a camera based system is provided for a car, that can make use of existing cameras or use bespoke cameras that are looking at scenes outside of the car with the cameras focussed on infinity, and the system enables the determination of a weather state outside of the car.

In third aspect, there is provided a method for determining a weather state, comprising:

a) providing a processing unit with at least one image, the at least one image relating to a scene external to a vehicle viewed through a windscreen of the vehicle;
b) processing with the processing unit the at least one image to determine a plurality of measurements of features that are correlated with blur;
c) determining with the processing unit information relating to a weather state outside the vehicle, the determination comprising a calculation of at least one measure of a spread in the plurality of measurements of features that are correlated with blur; and
d) outputting with an output unit output information representative of the weather state outside the vehicle.

In an example, the at least one image comprises a first image and a second image, and wherein step c) comprises calculating at least one measure of a spread in the plurality of measurements of features that are correlated with blur in the first image and calculating at least one measure of a spread in the plurality of measurements of features that are correlated with blur in the second image.

According to another aspect, there is provided a computer program element controlling apparatus as previously described which, in the computer program element is executed by processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of an example of a device for determining a weather state;
Fig. 2 shows a schematic set up of an example of a system for determining a weather state;
Fig. 3 shows a method for determining a weather state; and
Fig. 4 shows an example of an image that has been divided into different regions and that is utilized within the device, system and method of Figs 1-3;
Fig. 5 shows an example of the operation of a Laplacian operator;
Fig. 6 shows an example of image scenes within and without rain that have been subject to the Laplacian operator as shown in Fig. 5;
Fig. 7 shows an example of vector inputs that are constructed as inputs for a support vector machine (SVM) machine learning algorithm.

DETAILED DESCRIPTION OF EMBODIMENTS

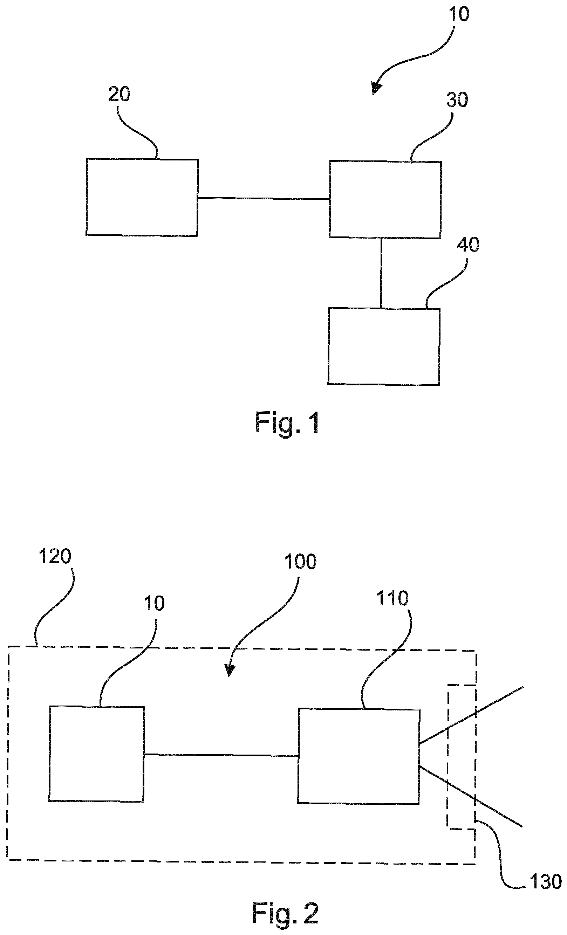

Fig. 1 shows an example of a device 10 for determining a weather state. The device 10 comprises an input unit 20, a processing unit 30, and an output unit 40. The input unit 20 is configured to provide the processing unit 30 with at least one image. The at least one image relates to a scene external to a vehicle viewed through a windscreen of the vehicle. The processing unit 30 is configured to process the at least one image to determine a plurality of measurements of features that are correlated with blur. The processing unit 30 is also configured to determine information relating to a weather state outside the vehicle. The determination comprises a calculation of at least one measure of a spread in the plurality of measurements. The output unit 40 is configured to output information representative of the weather state outside the vehicle.

In an example, the weather state is one or more of: that it is raining; that it is sleeting; that it is snowing; that it is hailing; that it is misty; that it is foggy; that there is no precipitation.

In an example, the at least one image was acquired by at least one camera that was not focussed on the windscreen of the vehicle. Thus in this manner, standard vehicle cameras that are viewing scenes external to the vehicle as part of navigation and/or safety systems, or as part of automatic driving systems.

According to an example, the processing unit is configured to utilise a Laplacian operator to determine the plurality of measurements of features that are correlated with blur.

In an example, only the central part of an image is used, and in an example a 3x3 Laplacian operator is used. Thus further computational efficiency is provided. A 3x3 Laplacian operator is an example, and a larger operator could be used - for example a 5x5 operator.

In an example, a Gaussian filter is applied before the Laplacian operator is utilised. In this manner, the images are smoothed and this reduces noise, specifically high frequency noise components.

According to an example, the calculation of the measure of the spread in the plurality of measurements of features that are correlated with blur comprises a determination of a variance in the plurality of measurements.

According to an example, the processing unit is configured to process the at least one image to determine one or more of: at least one mean hue value; at least one mean saturation value; at least one contrast value; and at least one minimum brightness value; and wherein the determination of the information relating to the weather state outside the vehicle comprises one or more of: the at least one mean hue value; the at least one mean saturation value; the at least one contrast value; and the at least one minimum brightness value.

According to an example, the processing unit is configured to subdivide the at least one image into a plurality of local regions of interest. The processing unit is then configured to determine a plurality of measurements of features that are correlated with blur for each of the plurality of the local regions of interest. The processing unit is configured to determine a plurality of measures of spread in the plurality of measurements of features that are correlated with blur in the plurality of local regions, wherein a measure of spread is calculated for each local region.

According to an example, the processing unit is configured to calculate for each of the plurality of local regions one or more of: one mean hue value; one mean saturation value; one contrast value; and one minimum brightness value.

According to an example, the processing unit is configured to determine a plurality of measurements of features that are correlated with blur for a global region that is larger than any of the local regions. The processing unit is then configured to determine a plurality of measures of spread in the plurality of measurements of features that are correlated with blur in the global region.

According to an example, for the global region, the processing unit is configured to calculate one or more of: one mean hue value; one mean saturation value; one contrast value; and one minimum brightness value.

According to an example, each measurement of features that are correlated with blur is centred at a position that is not at the lateral sides of the at least one image; and/or each measurement of features that are correlated with blur is centred at a position that is not at the top and/or bottom of the at least one image.

According to an example, the at least one image comprises a first image and a second image, and wherein the determination of information relating to a weather state outside of the vehicle comprises a calculation of at least one measure of a spread in the plurality of measurements of features that are correlated with blur in the first image and a calculation of at least one measure of a spread in the plurality of measurements of features that are correlated with blur in the second image.

Fig. 2 shows an example of a system 100 for determining a weather state. The system 100 comprises at least one camera 110, and a device 10 for determining a weather state as described with respect to Fig. 1. The at least one camera 110 is configured to be located within a vehicle 120 and the at least one camera 110 is configured to acquire the at least one image relating to a scene external to the vehicle viewed through the windscreen 130 of the vehicle 120.

In an example, the at least one camera 110 is the input unit (20.

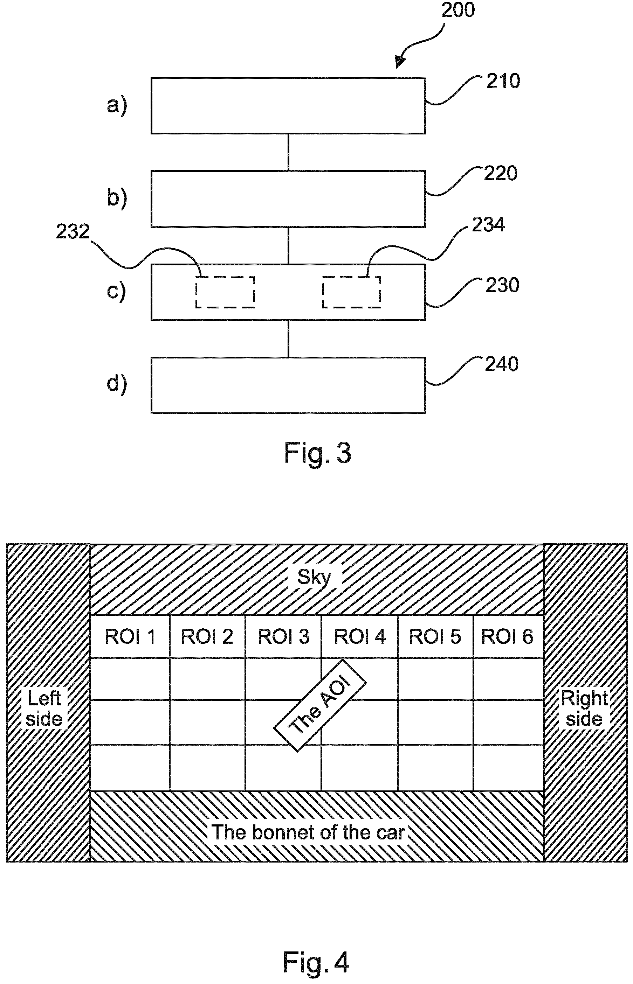

Fig. 3 shows a method 200 for determining a weather state in its basic steps. The method 200 comprises:

in a providing step 210, also referred to as step a), providing a processing unit 30 with at least one image, the at least one image relating to a scene external to a vehicle viewed through a windscreen of the vehicle;

in a processing step 220, also referred to as step b), processing with the processing unit the at least one image to determine a plurality of measurements of features that are correlated with blur;

in a determining step 230, also referred to as step c), determining with the processing unit information relating to a weather state outside the vehicle, the determination comprising a calculation of at least one measure of a spread in the plurality of measurements of features that are correlated with blur; and in an outputting step 240, also referred to as step d), outputting with an output unit (40) output information representative of the weather state outside the vehicle.

According to an example, the at least one image comprises a first image and a second image, and wherein step c) comprises calculating 232 at least one measure of a spread in the plurality of measurements of features that are correlated with blur in the first image and calculating 234 at least one measure of a spread in the plurality of measurements of features that are correlated with blur in the second image.

The device, system and method are now described in further detail with respect to Figs. 4-7.

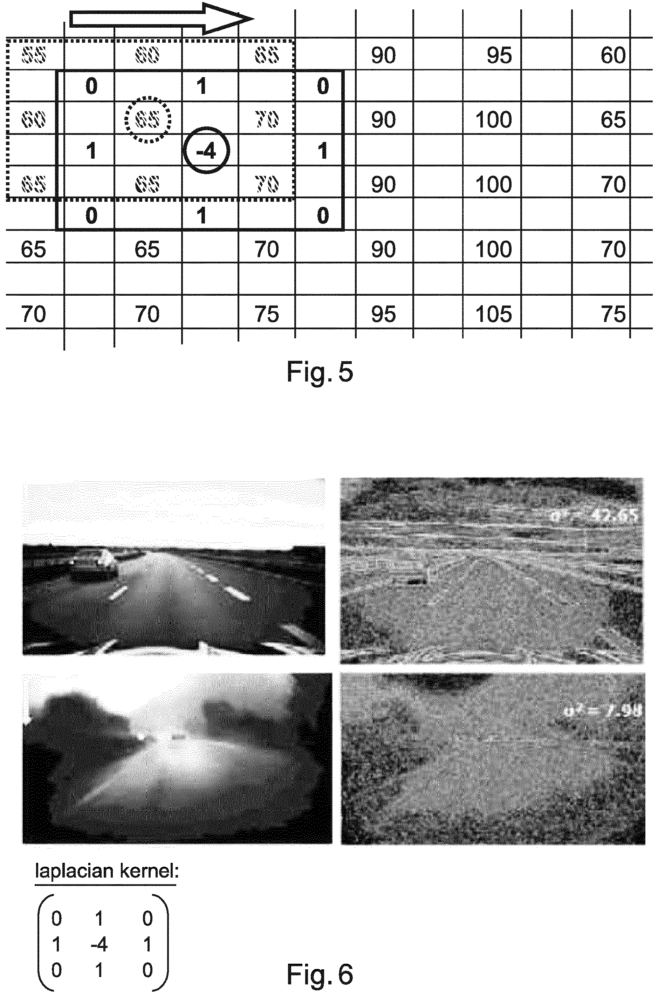

Fig. 4 shows an acquired image, of for example a road scene as shown in Fig. 6. The image has been acquired by the on-board camera of a vehicle that is viewing the scene through a windscreen of the vehicle. The camera acquires colour imagery, but could acquire monochrome imagery. The top and bottom parts of the image are not used, and are cropped. This means that imagery of the bonnet of the car and the sky are not used in image processing, because these regions are relatively invariant to changes in weather and/or exhibit a small number of edges that could then change with weather. The left and right side of the image also not used, and are cropped. The reason for this is that the sides of the image can have various feature content, depending upon whether the vehicle is an urban environment, an urban environment or in a highway scenario, and can lead to too much variation. This then leaves a central area of interest (AOI) that is then subdivided into 24 regions of interest (ROI).

For the AOI three global features are computed: the variance of the Laplacian; the mean hue; and the mean saturation. The mean hue and the mean saturation are colour dependent, and when a monochrome camera is used only the variance of the Laplacian is computed. For each of the ROIs five local features are computed; the variance of the Laplacian; the mean hue; the mean saturation; the local contrast, and the minimum brightness. When a monochrome camera is used, the mean hue and the mean saturation are not computed.

The five local features are computed for each ROI in the following manner:

- each ROI is divided in 210 sub - regions of interest
- feature normalization is performed
- to reduce the impact of noise, histograms are used with 10 bins between 0 and 1.

The three global features are similarly calculated, where the AOI is considered instead of an individual ROI.

A whole series of ground truth images are then acquired, which have been determined to have different weather conditions such as light rain, medium rain, heavy rain, snow, sleet, hailstones, fog, mist. The three global features and five local features are then calculated for each ground truth image.

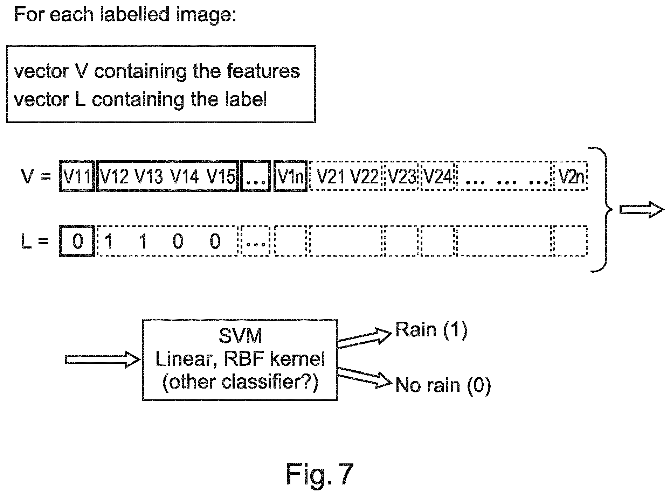

As shown in Fig. 7 two vectors are then constructed, one vector "V" having the three global features and the five local features for each image using the frequencies of the normalized features from each bin, and a second vector "L" indicating the weather state associated with that particular image, with "L" standing for "labels". For simplicity, the example shown in Fig. 7 has only two weather states of raining or not raining, indicated by a number 1 for rain and number 0 for not raining. However, when more weather states are considered the vector can contain the following number indications: light rain (1), medium rain (2), heavy rain (3), snow (4), sleet (5), hailstones (6), fog (7), mist (8) and no rain (9).

The two vectors for this ground truth information are then used to train a support vector machine (SVM) algorithm.

The image acquired in real-time is then applied to the trained SVM, enabling the determination to be made as to whether it is raining, and without rain is heavy, light, or of medium intensity and indeed whether it is faulty or not or indeed there is no inclement weather state.

Considering rain as a particular weather state of interest, the SVM can be constructed solely on the basis of the variance of the Laplacian and need not use the other feature information. The Laplacian captures the degradation of edge detection due to the blur in the image, caused by the rain. But it is not the only feature impacted by the rain that can be extracted from the image. Thus the other features, that can be more weakly correlated with the rain than the Laplacian, they can still be used to improve the accuracy of the detection.

How the different features are computed as now discussed.

The Laplacian operator $\begin{pmatrix} 0 & 1 & 0 \\ 1 & -4 & 1 \\ 0 & 1 & 0 \end{pmatrix}$ is a 3×3 matrix which is applied like a mask on a 3×3 pixel patch.

As shown in Fig.5, this matrix is overlapped on the pixel intensities, starting with the upper left corner such that -4 is centred on the pixel that is to be transformed, for instance the 65 intensity pixel. Then element-wise multiplication is performed, 0 being multiplied by 55, 1 with 60, etc; and the results are summed up. The encircled pixel, with intensity of 65, will be replaced by the result. After this operation, the operation moves to the right. Fig. 6 shows the operation of the Laplacian operator on two scenes, one with rain and one without rain. As observed the variance $\sigma^2$ in the image with rain is less than that when there is no rain, because the rain has washed out features such as edges.

The variance in the Laplacian is calculated

using the formula

$$Var(x) = \frac{1}{N}\sum_{i}^{\square}(x_i - \mu)^2$$

Where $x_i$ are the intensity values after applying the Laplacian operator. N is the number of pixels and $\mu$ is the average value of pixel intensities after the transformation.

The local contrast is computed as the difference between the maximum intensity value and the minimum intensity value (in the ROI) and divided by the sum of the maximum and the minimum.

The minimum of brightness is computed as the minimum of intensity in the ROI we are interested.

The mean hue and saturation are calculated as follows. In order to compute these values, the image is transformed from the RGB colour-space to the HSV colour-space. The hue range is [0-179] and the saturation range is [0-255]. The mean hue and the mean saturation are calculated as the mean of all the hue values and respectively the saturation values. These operations are performed for the whole AOI (global features) and for each ROI (local features).

Regarding the SVM, this is a supervised classification algorithm. Given a set of points (the features) of the simple case of two classes (rain and no-rain) in N-dimensional space, the SVM generates an N-1 dimensional hyperplane to separate those points into the two classes. An SVM for the 9 classes discussed above, including fog and different degrees, operates similarly.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing the invention within the scope of the claims from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items recited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for determining a weather state, comprising:

   - an input unit (20);
   - a processing unit (30); and
   - an output unit (40);

     wherein, the input unit is configured to provide the processing unit with at least one image, the at least one image relating to a scene external to a vehicle viewed through a windscreen of the vehicle, and wherein the at least one image was acquired by at least one camera that was not focussed on the windscreen of the vehicle;
     wherein, the processing unit is configured to process the at least one image to determine the variance in the intensity values of the image after applying the Laplacian operator in the imaged scene external to the vehicle;
     wherein, the processing unit is configured to determine information relating to a weather state outside the vehicle using said variance

wherein, the output unit is configured to output information representative of the weather state outside the vehicle.

2. Device according to claim 1, wherein the processing unit is configured to process the at least one image to determine one or more of: at least one mean hue value; at least one mean saturation value; at least one contrast value; and at least one minimum brightness value; and wherein the determination of the information relating to the weather state outside the vehicle comprises one or more of: the at least one mean hue value; the at least one mean saturation value; the at least one contrast value; and the at least one minimum brightness value.

3. Device according to any of claims 1-2, wherein the processing unit is configured to subdivide the at least one image into a plurality of local regions of interest; wherein the processing unit is configured to determine a plurality of measurements of features that are correlated with blur for each of the plurality of the local regions of interest; and wherein the processing unit is configured to determine a plurality of measures of spread in the plurality of measurements of features that are correlated with blur in the plurality of local regions, wherein a measure of spread is calculated for each local region.

4. Device according to claim 3, wherein the processing unit is configured to calculate for each of the plurality of local regions one or more of: one mean hue value; one mean saturation value; one contrast value; and one minimum brightness value.

5. Device according to any of claims 3-4, wherein the processing unit is configured to determine a plurality of measurements of features that are correlated with blur for a global region that is larger than any of the local regions; and wherein the processing unit is configured to determine a plurality of measures of spread in the plurality of measurements of features that are correlated with blur in the global region.

6. Device according to claim 5, wherein for the global region, the processing unit is configured to calculate one or more of: one mean hue value; one mean saturation value; one contrast value; and one minimum brightness value.

7. Device according to any of claims 1-6, wherein each measurement of features that are correlated with blur is centred at a position that is not at the lateral sides of the at least one image; and/or each measurement of features that are correlated with blur is centred at a position that is not at the top and/or bottom of the at least one image.

8. Device according to claim 1, wherein the at least one image comprises a first image and a second image, and wherein the determination of information relating to a weather state outside of the vehicle comprises a calculation of at least one measure of a spread in the plurality of measurements of features that are correlated with blur in the first image and a calculation of at least one measure of a spread in the plurality of measurements of features that are correlated with blur in the second image.

9. A system (100) for determining a weather state, comprising:

   - at least one camera (110);
   - a device (10) for determining a weather state according to any of claims 1-8, where the input unit is said camera;

   wherein, the at least one camera is configured to be located within a vehicle (120) and the at least one camera is configured to acquire the at least one image relating to a scene external to the vehicle viewed through the windscreen (130) of the vehicle, and wherein the at least one camera is not focussed on the windscreen of the vehicle.

10. A method (200) for determining a weather state, comprising:

   a) providing (210) a processing unit (30) with at least one image, the at least one image relating to a scene external to a vehicle viewed through a windscreen of the vehicle and wherein the at least one image is acquired by at least one camera that is not focussed on the windscreen of the vehicle;
   b) processing (220) with the processing unit the at least one image to determine a plurality of measurements of features in the imaged scene external to the vehicle that are correlated with blur;
   c) determining (230) with the processing unit information relating to a weather state outside the vehicle, the determination comprising a calculation of at least one measure of a spread in the plurality of measurements of features that are correlated with blur, wherein a measurement of a feature correlated with blur is a measure of sharpness, and/or a degree of focus and/or a measure of edges in an image and
   d) outputting (240) with an output unit (40) output information representative of the weather state outside the vehicle.

11. Method according to claim 10, wherein the at least one image comprises a first image and a second image, and wherein step c) comprises calculating

(232) at least one measure of a spread in the plurality of measurements of features that are correlated with blur in the first image and calculating (234) at least one measure of a spread in the plurality of measurements of features that are correlated with blur in the second image.

12. A computer program element for controlling an apparatus according to any one of claims 1 to 8 and/or a system according to claim 9, which when executed by a processor is configured to carry out the method of any of claims 10-11.

**Patentansprüche**

1. Vorrichtung (10) zur Bestimmung von Witterungsverhältnissen, umfassend:

   - eine Eingabeeinheit (20);
   - eine Verarbeitungseinheit (30); und
   - eine Ausgabeeinheit (40);
   wobei die Eingabeeinheit dazu ausgebildet ist, für die Verarbeitungseinheit mindestens ein Bild bereitzustellen, wobei sich das mindestens eine Bild auf eine Szene außerhalb eines Fahrzeugs bezieht, die durch eine Windschutzscheibe des Fahrzeugs betrachtet wird, und wobei das mindestens eine Bild von mindestens einer Kamera erfasst wurde, die nicht auf die Windschutzscheibe des Fahrzeugs fokussiert war;
   wobei die Verarbeitungseinheit dazu ausgebildet ist, das mindestens eine Bild zu verarbeiten, um die Varianz in den Intensitätswerten des Bildes nach Anwendung des Laplace-Operators in der abgebildeten Szene außerhalb des Fahrzeugs zu bestimmen;
   wobei die Verarbeitungseinheit dazu ausgebildet ist, unter Verwendung der Varianz Informationen zu bestimmen, die sich auf Witterungsverhältnisse außerhalb des Fahrzeugs beziehen;
   wobei die Ausgabeeinheit dazu ausgebildet ist, Informationen auszugeben, die für die Witterungsverhältnisse außerhalb des Fahrzeugs repräsentativ sind.

2. Vorrichtung nach Anspruch 1, wobei die Verarbeitungseinheit dazu ausgebildet ist, das mindestens eine Bild zu verarbeiten, um eines oder mehreres zu bestimmen von: mindestens einem mittleren Farbtonwert; mindestens einem mittleren Sättigungswert; mindestens einem Kontrastwert; und mindestens einem minimalen Helligkeitswert; und wobei die Bestimmung der Informationen, die sich auf Witterungsverhältnisse außerhalb des Fahrzeugs beziehen, eines oder mehreres umfasst von: dem mindestens einen mittleren Farbtonwert; dem mindestens einen mittleren Sättigungswert; dem mindestens einen Kontrastwert; und dem mindestens einen minimalen Helligkeitswert.

3. Vorrichtung nach einem der Ansprüche 1-2, wobei die Verarbeitungseinheit dazu ausgebildet ist, das mindestens eine Bild in mehrere lokale Bereiche von Interesse zu unterteilen; wobei die Verarbeitungseinheit dazu ausgebildet ist, mehrere Messungen von Merkmalen, die mit Unschärfe korreliert sind, für jeden der mehreren Bereiche von Interesse zu bestimmen; und wobei die Verarbeitungseinheit dazu ausgebildet ist, mehrere Maße der Spreizung in den mehreren Messungen von Merkmalen, die mit Unschärfe korreliert sind, in den mehreren lokalen Bereichen zu bestimmen, wobei ein Maß der Spreizung für jeden lokalen Bereich berechnet wird.

4. Vorrichtung nach Anspruch 3, wobei die Verarbeitungseinheit dazu ausgebildet ist, für jeden der mehreren lokalen Bereiche eines oder mehreres zu berechnen von: einem mittleren Farbtonwert; einem mittleren Sättigungswert; einem Kontrastwert; und einem minimalen Helligkeitswert.

5. Vorrichtung nach einem der Ansprüche 3-4, wobei die Verarbeitungseinheit dazu ausgebildet ist, mehrere Messungen von Merkmalen, die mit Unschärfe korreliert sind, für einen globalen Bereich zu bestimmen, der größer als jeder der lokalen Bereiche ist; und wobei die Verarbeitungseinheit dazu ausgebildet ist, mehrere Maße der Spreizung in den mehreren Messungen von Merkmalen, die mit Unschärfe korreliert sind, in dem globalen Bereich zu bestimmen.

6. Vorrichtung nach Anspruch 5, wobei für den globalen Bereich die Verarbeitungseinheit dazu ausgebildet ist, eines oder mehreres zu berechnen von: einem mittleren Farbtonwert; einem mittleren Sättigungswert; einem Kontrastwert; und einem minimalen Helligkeitswert.

7. Vorrichtung nach einem der Ansprüche 1-6, wobei jede Messung von Merkmalen, die mit Unschärfe korreliert sind, an einer Position zentriert ist, die sich nicht an den lateralen Seiten des mindestens einen Bildes befindet; und/oder jede Messung von Merkmalen, die mit Unschärfe korreliert sind, an einer Position zentriert ist, die sich nicht am oberen und/oder unteren Rand des mindestens einen Bildes befindet.

8. Vorrichtung nach Anspruch 1, wobei das mindestens eine Bild ein erstes Bild und ein zweites Bild umfasst und wobei die Bestimmung von Informationen, die sich auf Witterungsverhältnisse außerhalb des Fahrzeugs beziehen, eine Berechnung mindestens eines Maßes einer Spreizung in den mehreren Messungen von Merkmalen, die mit Unschärfe korreliert sind, im ersten Bild und eine Berechnung mindestens eines Maßes einer Spreizung in den mehreren Messungen von Merkmalen, die mit Unschärfe korreliert sind, im zweiten Bild umfasst.

**9.** System (100) zur Bestimmung von Witterungsverhältnissen, umfassend:

- mindestens eine Kamera (110);
- eine Vorrichtung (10) zur Bestimmung von Witterungsverhältnissen nach einem der Ansprüche 1-8, wobei die Eingabeeinheit die Kamera ist;

wobei die mindestens eine Kamera dazu ausgebildet ist, sich innerhalb eines Fahrzeugs (120) zu befinden, und die mindestens eine Kamera dazu ausgebildet ist, das mindestens eine Bild zu erfassen, das sich auf eine Szene außerhalb des Fahrzeugs bezieht, die durch die Windschutzscheibe (130) des Fahrzeugs betrachtet wird, und wobei die mindestens eine Kamera nicht auf die Windschutzscheibe des Fahrzeugs fokussiert ist.

**10.** Verfahren (200) zur Bestimmung von Witterungsverhältnissen, welches aufweist:

a) Bereitstellen (210) mindestens eines Bildes für eine Verarbeitungseinheit (30), wobei sich das mindestens eine Bild auf eine Szene außerhalb eines Fahrzeugs bezieht, die durch eine Windschutzscheibe des Fahrzeugs betrachtet wird, und wobei das mindestens eine Bild von mindestens einer Kamera erfasst wird, die nicht auf die Windschutzscheibe des Fahrzeugs fokussiert ist;

b) Verarbeiten (220) des mindestens einen Bildes mit der Verarbeitungseinheit, um mehrere Messungen von Merkmalen in der abgebildeten Szene außerhalb des Fahrzeugs, die mit Unschärfe korreliert sind, zu bestimmen;

c) Bestimmen (230) von Informationen, die sich auf Witterungsverhältnisse außerhalb des Fahrzeugs beziehen, mit der Verarbeitungseinheit, wobei die Bestimmung eine Berechnung mindestens eines Maßes einer Spreizung in den mehreren Messungen von Merkmalen, die mit Unschärfe korreliert sind, umfasst, wobei eine Messung eines Merkmals, das mit Unschärfe korreliert ist, ein Maß der Schärfe und/oder ein Fokussierungsgrad und/oder ein Maß von Rändern in einem Bild ist, und

d) Ausgeben (240) von Ausgabeinformationen, die für die Witterungsverhältnisse außerhalb des Fahrzeugs repräsentativ sind, mit einer Ausgabeeinheit (40).

**11.** Verfahren nach Anspruch 10, wobei das mindestens eine Bild ein erstes Bild und ein zweites Bild umfasst und wobei Schritt c) das Berechnen (232) mindestens eines Maßes einer Spreizung in den mehreren Messungen von Merkmalen, die mit Unschärfe korreliert sind, im ersten Bild und das Berechnen (234) mindestens eines Maßes einer Spreizung in den mehreren Messungen von Merkmalen, die mit Unschärfe korreliert sind, im zweiten Bild umfasst.

**12.** Computerprogrammelement zum Steuern einer Vorrichtung nach einem der Ansprüche 1 bis 8 und/oder eines Systems nach Anspruch 9, welches, wenn es von einem Prozessor ausgeführt wird, dazu ausgebildet ist, das Verfahren nach einem der Ansprüche 10-11 durchzuführen.

**Revendications**

**1.** Dispositif (10) pour déterminer une condition météorologique, comprenant :

- une unité d'entrée (20) ;
- une unité de traitement (30) ; et
- une unité de sortie (40) ;
dans lequel l'unité d'entrée est configurée pour fournir à l'unité de traitement au moins une image, l'au moins une image concernant une scène externe à un véhicule vue à travers un pare-brise du véhicule, et dans lequel l'au moins une image a été acquise par au moins une caméra qui n'a pas été mise au point sur le pare-brise du véhicule ;
dans lequel l'unité de traitement est configurée pour traiter l'au moins une image pour déterminer la variance des valeurs d'intensité de l'image après avoir appliqué l'opérateur Laplacien dans la scène imagée externe au véhicule ;
dans lequel l'unité de traitement est configurée pour déterminer des informations concernant une condition météorologique à l'extérieur du véhicule en utilisant ladite variance,
dans lequel l'unité de sortie est configurée pour sortir des informations représentatives de la condition météorologique à l'extérieur du véhicule.

**2.** Dispositif selon la revendication 1, dans lequel l'unité de traitement est configurée pour traiter l'au moins une image pour déterminer une ou plusieurs valeurs parmi : au moins une valeur de teinte moyenne ; au moins une valeur de saturation moyenne ; au moins une valeur de contraste ; et au moins une valeur de luminosité minimum ; et dans lequel la détermination des informations concernant la condition météorologique à l'extérieur du véhicule comprend une ou plusieurs valeurs parmi : l'au moins une valeur de teinte moyenne ; l'au moins une valeur de saturation moyenne ; l'au moins une valeur de contraste ; et l'au moins une valeur de luminosité minimum.

3. Dispositif selon quelconques des revendications 1 et 2, dans lequel l'unité de traitement est configurée pour sous-diviser l'au moins une image en une pluralité de régions locales d'intérêt ; dans lequel l'unité de traitement est configurée pour déterminer une pluralité de mesures de caractéristiques qui sont corrélées avec un flou pour chacune de la pluralité des régions locales d'intérêt ; et dans lequel l'unité de traitement est configurée pour déterminer une pluralité de mesures de dispersion dans la pluralité de mesures de caractéristiques qui sont corrélées avec un flou dans la pluralité de régions locales, dans lequel une mesure de dispersion est calculée pour chaque région locale.

4. Dispositif selon la revendication 3, dans lequel l'unité de traitement est configurée pour calculer, pour chacune de la pluralité de régions locales, une ou plusieurs valeurs parmi : une valeur de teinte moyenne ; une valeur de saturation moyenne ; une valeur de contraste ; et une valeur de luminosité minimum.

5. Dispositif selon quelconques des revendications 3 et 4, dans lequel l'unité de traitement est configurée pour déterminer une pluralité de mesures de caractéristiques qui sont corrélées avec un flou pour une région globale qui est plus grande que n'importe lesquelles des régions locales ; et dans lequel l'unité de traitement est configurée pour déterminer une pluralité de mesures de dispersion dans la pluralité de mesures de caractéristiques qui sont corrélées avec un flou dans la région globale.

6. Dispositif selon la revendication 5, dans lequel, pour la région globale, l'unité de traitement est configurée pour calculer une ou plusieurs valeurs parmi : une valeur de teinte moyenne ; une valeur de saturation moyenne ; une valeur de contraste ; et une valeur de luminosité minimum.

7. Dispositif selon quelconques des revendications 1 à 6, dans lequel chaque mesure de caractéristiques qui sont corrélées avec un flou est centrée à une position qui n'est pas sur les côtés latéraux de l'au moins une image ; et/ou chaque mesure de caractéristiques qui sont corrélées avec un flou est centrée à une position qui n'est pas en haut et/ou en bas de l'au moins une image.

8. Dispositif selon la revendication 1, dans lequel l'au moins une image comprend une première image et une seconde image, et dans lequel la détermination d'informations concernant une condition météorologique à l'extérieur du véhicule comprend un calcul d'au moins une mesure d'une dispersion dans la pluralité de mesures de caractéristiques qui sont corrélées avec un flou dans la première image et un calcul d'au moins une mesure d'une dispersion dans la pluralité de mesures de caractéristiques qui sont corrélées avec un flou dans la seconde image.

9. Système (100) pour déterminer une condition météorologique, comprenant :

   - au moins une caméra (110) ;
   - un dispositif (10) pour déterminer une condition météorologique selon de quelconques des revendications 1 à 8, où l'unité d'entrée est ladite caméra ;

   dans lequel l'au moins une caméra est configurée pour être positionnée à l'intérieur d'un véhicule (120) et l'au moins une caméra est configurée pour acquérir l'au moins une image concernant une scène externe au véhicule vue à travers le pare-brise (130) du véhicule, et dans lequel l'au moins une caméra n'est pas mise au point sur le pare-brise du véhicule.

10. Procédé (200) pour déterminer une condition météorologique, comprenant :

    a) la fourniture (210), à une unité de traitement (30), d'au moins une image, l'au moins une image concernant une scène externe à un véhicule vue à travers un pare-brise du véhicule et dans lequel l'au moins une image est acquise par au moins une caméra qui n'est pas mise au point sur le pare-brise du véhicule ;
    b) le traitement (220), avec l'unité de traitement, de l'au moins une image pour déterminer une pluralité de mesures de caractéristiques dans la scène imagée externe au véhicule qui sont corrélées avec un flou ;
    c) la détermination (230), avec l'unité de traitement, d'informations concernant une condition météorologique à l'extérieur du véhicule, la détermination comprenant un calcul d'au moins une mesure d'une dispersion dans la pluralité de mesures de caractéristiques qui sont corrélées avec un flou, dans lequel une mesure d'une caractéristique corrélée avec un flou est une mesure de netteté, et/ou un degré de mise au point et/ou une mesure de bords dans une image ; et
    d) la sortie (240), avec une unité de sortie (40), d'informations de sortie représentatives de la condition météorologique à l'extérieur du véhicule.

11. Procédé selon la revendication 10, dans lequel l'au moins une image comprend une première image et une seconde image, et dans lequel l'étape c) comprend le calcul (232) d'au moins une mesure d'une dispersion dans la pluralité de mesures de caractéristiques qui sont corrélées avec un flou dans la première image et le calcul (234) d'au moins une mesure d'une dispersion dans la pluralité de mesures de caractéristiques qui sont corrélées avec un flou dans la seconde image.

12. Élément de programme d'ordinateur pour commander un appareil selon l'une quelconque des revendications 1 à 8 et/ou un système selon la revendication 9, qui, lorsqu'il est exécuté par un processeur est configuré pour effectuer le procédé de quelconques des revendications 10 et 11.

Fig. 1

Fig. 2

Fig. 3

Fig. 4

| 55 | | 60 | | 65 | | 90 | 95 | 60 |
|----|----|----|----|----|----|----|----|----|
| | 0 | | 1 | | 0 | | | |
| 60 | | 65 | | 70 | | 90 | 100 | 65 |
| | 1 | | -4 | | 1 | | | |
| 65 | | 65 | | 70 | | 90 | 100 | 70 |
| | 0 | | 1 | | 0 | | | |
| 65 | | 65 | | 70 | | 90 | 100 | 70 |
| 70 | | 70 | | 75 | | 95 | 105 | 75 |

Fig. 5

laplacian kernel:

$$\begin{pmatrix} 0 & 1 & 0 \\ 1 & -4 & 1 \\ 0 & 1 & 0 \end{pmatrix}$$

Fig. 6

For each labelled image:

> vector V containing the features
> vector L containing the label

$V = $ | V11 | V12 V13 V14 V15 | ... | V1n | V21 V22 V23 V24 ... ... ... V2n |

$L = $ | 0 | 1   1   0   0 | ... |

SVM
Linear, RBF kernel
(other classifier?)

Rain (1)

No rain (0)

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005098712 A1, STAM JOSEPH S
- US 2017109612 A1, MITTAL ANISH

- US 2016232423 A1, ZHONG XIN

**Non-patent literature cited in the description**

- Detection of Unfocused Raindrops on a Windscreen using Low Level Image Processing. *INTERNATIONAL CONFERENCE ON CONTROL, AUTOMATION, ROBOTICS AND VISION: ICARV'2010*, 01 December 2010, 1410-1415

- Detecting Unfocused Raindrops: In-Vehicle Multi-purpose Cameras. **CORD AURELIEN et al.** IEEE ROBOTICS & AUTOMATION MAGAZINE. IEEE SERVICE CENTER, 01 March 2014, vol. 21, 49-56